# EUROPEAN PATENT APPLICATION

(11) **EP 4 606 723 A1**
(43) Date of publication of application: **27.08.2025**
(21) Application number: 23879841.7
(22) Date of filing: 18.10.2023
(51) Int. Cl.: B65D 5/74

(54) **SPOUT PLUG AND PACKAGING CONTAINER USING SAME**

(30) Priority: 18.10.2022 JP 2022167175
(71) Applicant: Toppan Holdings Inc., Tokyo 110-0016 (JP)
(72) Inventor: HONJO Mika, Tokyo 1100016 (JP); KAWASAKI Minoru, Tokyo 110-0016 (JP); WADA Kiyoshi, Tokyo 110-0016 (JP)
(74) Representative: TBK
(86) International application number: PCT/JP2023/037754
(87) International publication number: WO 2024/085198

(57) **Abstract**

A spout plug and a packaging container using the spout plug are provided that can suppress the occurrence of pinholes in the welded area, even when ultrasonic welding is performed with high energy conditions using a high-speed filling device. The spout plug includes a spout and a cap attached to the spout by threadable engagement. The spout includes an annular base part, a cylindrical mouth part connected to an upper end of the base part, and a plate-like flange part extending outward from a lower end of the base part, the flange part and the base part have flat lower surfaces, and the base part includes a first annular part having a tapered inner circumferential surface whose inner diameter increases from an upper end side towards a lower end side.

## Description

### [Technical Field]

The present invention relates to a spout plug and a packaging container using the spout plug.

### [Background Art]

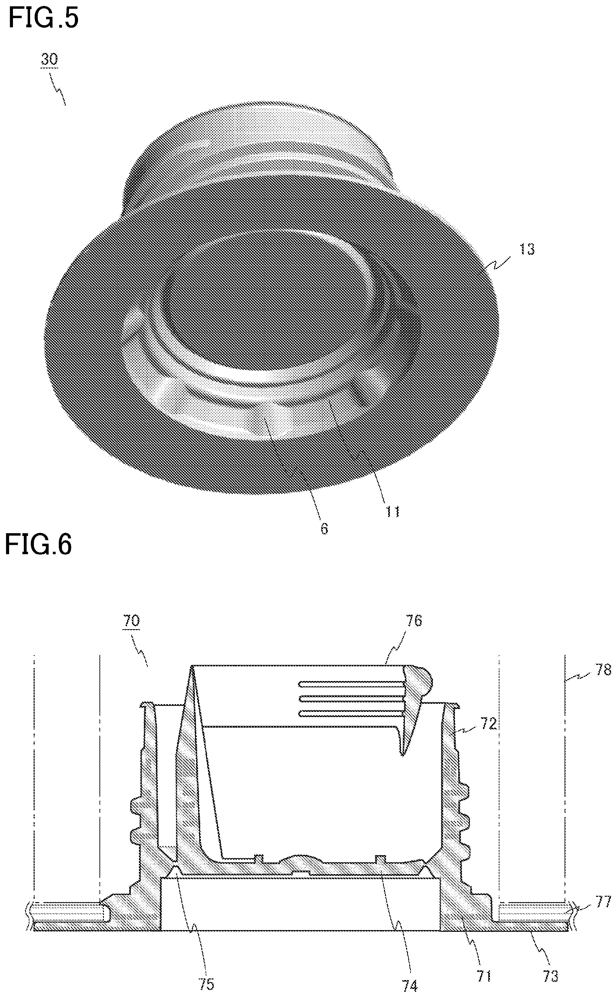

Fig. 6 shows a cross-sectional view of a conventional spout.

A spout 70 is a member attached to a container body 77 of a paper container or the like and used to pour out the contents. The spout 70 includes a base part 71 that is fitted into an opening provided in the container body 77 of a paper container or the like, a cylindrical mouth part 72 connected to the upper end of the base part 71, a flange part 73 extending outward from the lower end of the base part 71, a partition 74 closing the mouth part 72, and a pull ring 76 connected to the inner side of a thin part 75 provided in the partition 74. A cap (not shown) is removably attached to the mouth part 72 by threadable engagement.

To weld the spout 70 to the container body 77, first, as shown in Fig. 6, the mouth part 72 is inserted from its frond end into the opening of the container body 77, so that the base part 71 of the container body 77 is fitted into the opening. Next, the lower surface of the flange part 73 is supported by an anvil (not shown), and ultrasonic vibrations are generated while an ultrasonic horn 78 is pressed against the outer surface of the container body 77. Since the ultrasonic vibrations tend to be transmitted to the thick part of the base part 71, the base part 71 generates heat and softens. The ultrasonic vibrations cause the section above the base part 71 to vibrate vertically, which likely causes the softened base part 71 to stretch and the section above the base part 71 to bulge upward. This leads to defects in the shape of the spout 70.

Fig. 7 is a bottom view showing a conventional spout described in PTL 1, and Fig. 8 is a cross-sectional view taken along line VIII-VIII shown in Fig. 7.

A spout 80 includes a base part 81 that is fitted into an opening provided in the container body 87 of a paper container or the like, a cylindrical mouth part 82 connected to the upper end of the base part 81, a flange part 83 extending outward from the lower end of the base part 81, a partition 84 closing the mouth part 82, and a pull ring 86 connected to the inner side of a thin part 85 provided in the partition 84. A cap (not shown) is removably attached to the mouth part 82 by threadable engagement.

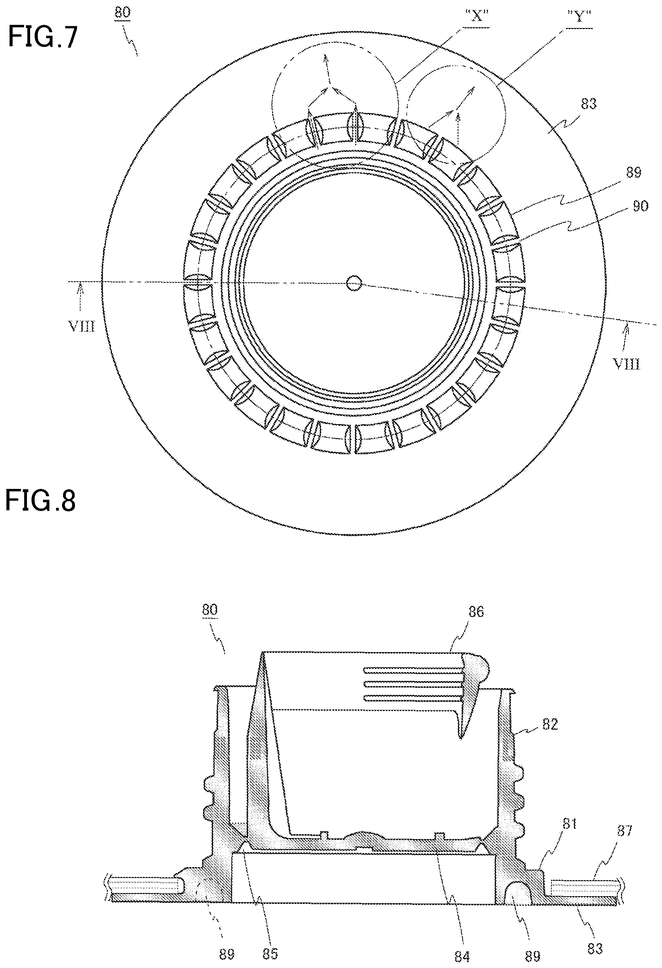

The spout 80 shown in Figs. 7 and 8 is provided with a plurality of recesses 89 are provided in the bottom of the base part 81. The recesses 89 are provided at regular intervals in the circumferential direction of the base part 81, and a rib 90 is formed between adjacent recesses 89 in the circumferential direction. To weld the spout 80 to the container body 87, similarly to the example described referring to Fig. 6, the lower surface of the flange part 83 is supported by an anvil (not shown), and ultrasonic vibrations are generated while an ultrasonic horn is pressed against the outer surface of the container body 87. Since the ultrasonic vibrations are partially absorbed by the recesses 89, softening of the base part 81 can be suppressed. In addition, due to the phase difference between the ultrasonic vibrations propagating through the recesses 89 and the radial ribs 90, the vibrations propagating to the section above the base part 81 can be suppressed. This makes it possible to reduce the bulging phenomenon of the section above the base part, which is likely to occur in the spout 70 shown in Fig. 6.

### [Citation List]

### [Patent Literature]

[PTL 1] JP 2016-033057 A

### [Summary of the Invention]

### [Technical Problem]

The above-described welding of the spout to the container body is performed during a filling step in which the container body is filled with the contents. When high-speed filling devices, which have faster filling speeds than conventional devices, are used, the ultrasonic welding is performed with high energy (high amplitude) so that the spout plug can be welded in a short period of time. Since the spout plug shown in Figs. 7 and 8 is provided with a plurality of recesses and ribs, junctions where different resin flows meet during injection molding are formed in the flange part. Air tends to remain in these resin flow junctions, which makes the welding around the resin flow junctions in the flange part unstable when welding is performed under high energy conditions, causing the problem that pinholes are likely to be formed in the welded area.

Therefore, an object of the present invention is to provide a spout plug and a packaging container using the spout plug capable of suppressing the occurrence of pinholes in the welded area even when ultrasonic welding is performed with high energy conditions using a high-speed filling device.

### [Solution to Problem]

A spout plug according to the present invention includes a spout and a cap attached to the spout by threadable engagement, in which the spout includes an annular base part, a cylindrical mouth part connected to an upper end of the base part, and a plate-like flange part extending outward from a lower end of the base part, the flange part and the base part have flat lower surfaces, and the base part includes a first annular part having a tapered inner circumferential surface whose inner diameter increases from an upper end side towards a lower end side.

A packaging container according to the present invention includes a container body, and the above-described spout plug attached to the container body.

### [Advantageous Effects of the Invention]

According to the present invention, a spout plug and a packaging container using the spout plug can be provided that can suppress the occurrence of pinholes in the welded area, even when ultrasonic welding is performed under high energy conditions using a high-speed filling device.

### [Brief Description of the Drawings]

[Fig. 1] Fig. 1 is a cross-sectional view illustrating a spout according to a first embodiment.
[Fig. 2] Fig. 2 is a cross-sectional view illustrating a spout according to a second embodiment.
[Fig. 3] Fig. 3 is a bottom view illustrating a spout according to a third embodiment.
[Fig. 4] Fig. 4 is a cross-sectional view taken along the line IV-IV of Fig. 3.
[Fig. 5] Fig. 5 is a perspective view illustrating the spout according to the third embodiment.
[Fig. 6] Fig. 6 shows a cross-sectional view of a conventional spout.
[Fig. 7] Fig. 7 shows a bottom view of a conventional spout.
[Fig. 8] Fig. 8 is a cross-sectional view taken along the line VIII-VIII shown in Fig. 7.
[Fig. 9] Fig. 9 is a perspective view illustrating a spout according to a fourth embodiment.
[Fig. 10] Fig. 10 is a perspective view illustrating a spout according to a fifth embodiment.
[Fig. 11] Fig. 11 is a perspective view illustrating a spout according to a sixth embodiment.

### [Description of the Embodiments]

### (First Embodiment)

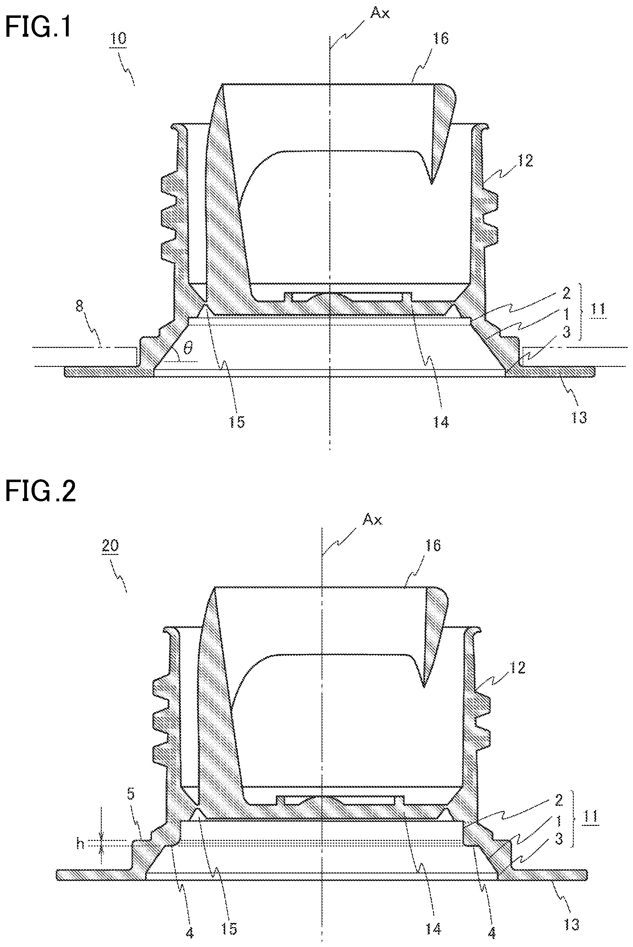

Fig. 1 is a cross-sectional view illustrating a spout according to a first embodiment. In Fig. 1 and subsequent drawings, "Ax" represents the central axis of a mouth part 12.

The spout plug according to this embodiment includes a spout 10 and a cap (not shown) attached to the spout 10 by threadable engagement. The spout 10 is attached to a container body 8 of a paper container, a pouch, a tube container, or the like to form a packaging container. The spout 10 can be formed by injection molding of a thermoplastic resin. Examples of thermoplastic resins that can be used include low-density polyethylene (LDPE), linear low-density polyethylene (LLDPE), soft LDPE or LLDPE polymerized using a metallocene catalyst, ultra-low-density LDPE, blend resins of two or more types of these resins, and copolymers of two or more types of monomers of these resins. A main component of the material of the spout 10 is preferably polyethylene. High-density polyethylene (HDPE) and medium-density polyethylene (MDPE) can also be used. The innermost layer of the container body 8 to be welded to the flange part 13 of the spout 10 is also preferably formed from the above-described thermoplastic resin.

The spout 10 includes an annular base part 11, a cylindrical mouth part 12 connected to the upper end of the base part 11, a flat flange part 13 extending outward from the lower end of the base part 11, a plate-like partition 14 closing the inside of the mouth part 12, and a pull ring 16 connected to the inner side of a thin part 15 provided in the partition 14. When the packaging container is to be opened, the relatively thinned thin part 15 is torn by placing a finger in the ring of the pull ring 16 and pulling it, so that the partition 14 is separated from the mouth part 12. This forms a flow path in the mouth part 12 for pouring out the contents. Note that the outer circumferential surface of the mouth part 12 is provided with male threads for threadable engagement with female threads on the cap (not shown).

The base part 11 serves as the base of the spout 10, and is fitted into an opening in the container body 8 when the spout 10 is welded to the container body 8. The base part 11 includes a first annular part 1 having a tapered inner circumferential surface whose inner diameter increases from the upper end side towards the lower end side of the base part 11, a second annular part 2 connected to the mouth part 12 and the first annular part 1 and having an inner circumferential surface with a constant inner diameter, and a third annular part 3 connected to the first annular part 1 on the lower end side of the base part 11 and having an inner circumferential surface with a constant inner diameter.

In the spout 10 according to this embodiment, the lower surfaces of the flange part 13 and base part 11 are flat, and are not provided with the recesses 89 or radial ribs 90 shown in Figs. 7 and 8. However, the amount of resin (wall thickness) of the base part 11 is reduced by providing the base part 11 with the first annular part 1, which has a tapered inner circumferential surface whose inner diameter increases from the upper end side towards the lower end side. When the spout has a structure in which the base part is thick like the conventional spout shown in Fig. 6, the base part softens easily when ultrasonic vibrations are applied because the vibrations are concentrated on the thick part of the base part. In contrast, in the spout 10 of this embodiment, the base part 11 is thinner due to the first annular part 1 having a tapered inner circumferential surface, and therefore the energy of the ultrasonic vibrations is less likely to concentrate on the base part 11. As a result, the softening of the base part 11 does not progress much, and the section above the base part 11 can be prevented from being bulged by the ultrasonic vibrations.

If the spout 80 shown in Figs, 7 and 8 is welded under conventional welding conditions, since the recesses absorb the ultrasonic vibrations, and the recesses 89 and ribs 90 suppress the vibrations, it is possible to prevent the base part 81 from softening and in turn the section above the base part 81 from bulging. However, if ultrasonic welding is performed with a high-speed filling device under high energy conditions (for example, if the amount of energy applied during ultrasonic welding is 130 J or more), pinholes are likely to be formed in the welded area of the flange part. The reason why pinholes are formed will be described below with reference to Figs. 7 and 8.

When the spout 80 shown in Figs. 7 and 8 is injection molded, molten resin is injected into the mold from a position corresponding to the center of the partition 84. The flow of molten resin injected from the center of the partition 84 reaches the inner periphery of the flange part 83, and then splits when it meets the recesses 89 and the ribs 90. As indicated by the arrows in an area X in Fig. 7, the split flows of molten resin join together between the inner periphery and the middle of the flange part 83, and then flow towards the outer periphery of the flange part 83. When the resin flows quickly, the joining pattern will be as shown by the arrows in the area X in Fig. 7, and when the resin flows slowly, the joining pattern will be as shown by the arrows in an area Y in Fig. 7. In either case, since a resin flow that reached the junction earlier and a resin flow that reached there later meet at the junction, the air remaining in the resin flow front that arrived later does not escape and remains as compressed air near the surface of the flange part 83. If this resin flow junction is at or near the welded area of the ultrasonic welding, the remaining air may reduce the adhesion, and pinholes may be formed in the welded area. This has particularly been a cause of pinholes when ultrasonic welding is performed in a short time under high energy conditions.

Depending on the contents filled into the container body, the spout 10 may be required to have high strength characteristics. In such case, it may be necessary to use a highly resistant resin with a melt index (MI) of 2.0 g/10 min or less. However, since a resin with a low MI has poor fluidity, when the structure (the recesses 89 and rib 90) shown in Figs. 7 and 8 is adopted, resin flow junctions have tended to be formed on the inner periphery side of the flange part 82, and pinholes have tended to be formed particularly.

In contrast, in the spout 10 according to the present embodiment, the lower surfaces of the base part 11 and flange part 13 are flat and do not have an uneven structure like the recesses 89 and ribs 90. This prevents resin flow junctions such as those shown in the areas X and Y in Fig. 7 from being generated during injection molding. Therefore, air is less likely to remain in the flange part 13, and the formation of pinholes can be suppressed even when ultrasonic welding is performed under high energy conditions. Further, according to the spout 10 of this embodiment, the lower surfaces of the flange part 13 and the base part 11 do not have a structure that tends to have resin flow junctions. This suppresses the formation of pinholes during ultrasonic welding even when a highly resistant resin with low fluidity (MI) is used, which means that there is a high degree of freedom in the selection of resin depending on the contents.

Conventionally, pinholes have tended to occur when ultrasonic welding is performed at low temperature. By adopting the structure of the spout 10 according to the present embodiment, it is possible to suppress the formation of pinholes in the flange part 13 even when ultrasonic welding is performed at low temperature.

Since no resin flow split points or junctions are formed in the flange part 13 during injection molding in the spout 10 of this embodiment, cracks are less likely to occur even if stress (load) is applied to the welded area after welding.

In this embodiment, an inclination angle θ of the inner circumferential surface of the first annular part 1 of the base part 11 (in a cross section taken along a plane including the central axis Ax of the mouth part 12, the angle between the contour line of the inner circumferential surface of the first annular part 1 and a straight line perpendicular to the central axis Ax) is preferably 30 to 70 degrees. When the inclination angle θ of the inner circumferential surface of the first annular part 1 falls within this range, it is easy to ensure the rigidity of the base part 11 in the direction of the central axis Ax while reducing its thickness.

In the spout 10 according to this embodiment, the second and third annular parts 2 and 3, which have inner circumferential surfaces with a constant inner diameter, may be omitted, and the entire inner circumferential surface of the base part 11 may be tapered. However, the strength against a load in the vertical direction (the direction in which the central axis Ax extends) is improved if the second or third annular part 2 or 3 is provided. The height of the second and third annular parts 2 and 3 is not particularly limited, but they preferably have a height equal to or greater than the thickness of the flange part 13. In that case, the strength against a vertical load can be sufficiently improved.

As described above, the spout 10 of this embodiment is characterized in that the base part 11 is provided with the first annular part 1 having a tapered inner circumferential surface, and the lower surfaces of the base part 11 and the flange part 13 are flat. This configuration makes it possible to realize a spout plug capable of suppressing the bulging phenomenon of the section above the base part 11 and reducing the occurrence of pinholes in the flange part 13, even when ultrasonic welding is performed under high energy conditions.

### (Second Embodiment)

Fig. 2 is a cross-sectional view illustrating a spout according to a second embodiment. The following description will center on the differences between the first embodiment and the present embodiment.

A basic configuration of a spout 20 according to the present embodiment is similar to that of the first embodiment. However, the spout 20 according to this embodiment differs from the spout 10 of the first embodiment in that the inner circumferential surface of the first annular part 1 and the inner circumferential surface of the second annular part 2 above it are connected via a flat part 4. The flat part 4 is an annular flat surface that lies in a plane perpendicular to the central axis Ax of the mouth part 12. The outer peripheral edge of the flat part 4 is connected to the upper edge of the first annular part 1, and the inner peripheral edge of the flat part 4 is connected to the lower edge of the second annular part via a curved surface. By having a structure in which the first and second annular parts 1 and 2 are connected via the flat part 4, the first annular part 1 allows the base part 11 to be thinner, while the rigidity of the base part 11 is improved by increasing the thickness of the second annular part 2. Therefore, it is possible to suppress vibrations in the vertical direction (the direction in which the central axis Ax extends) during ultrasonic welding and prevent the section above the base part 11 from bulging more effectively.

In the spout 20 according to this embodiment, the outer circumferential surface of the base part 11 is provided with an annular flat part 5 perpendicular to the central axis Ax. In this configuration, a perpendicular distance h between the plane including the flat part 4 and the plane including the flat part 5 is preferably 1.0 mm or less. When the perpendicular distance h to 1.0 mm or less, it is possible to prevent the section of the base part 11 near the second annular part 2 from becoming too thick.

### (Third Embodiment)

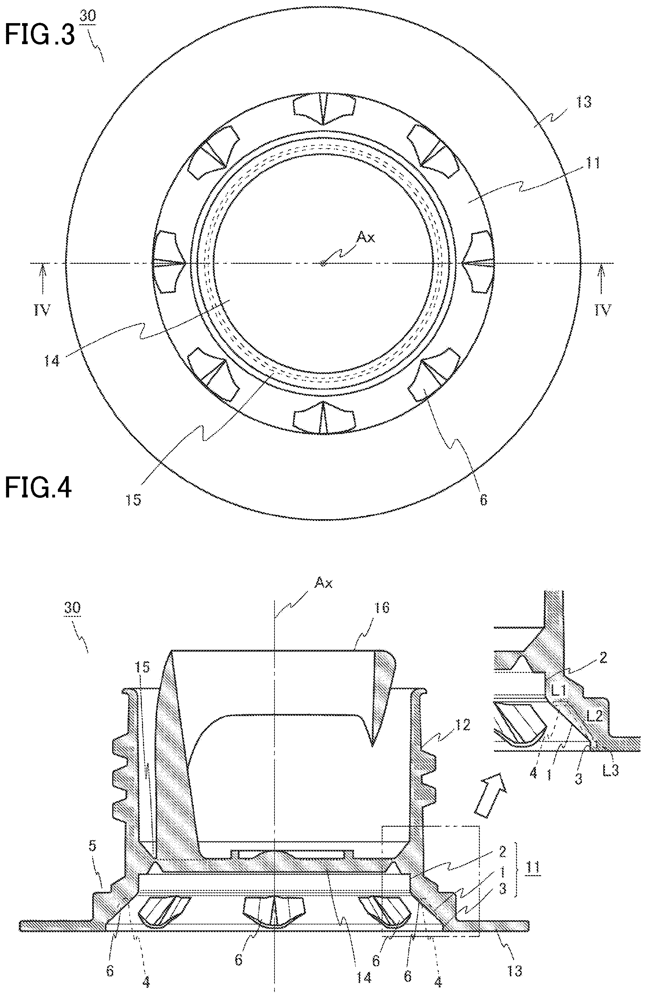

Fig. 3 is a bottom view showing a spout according to a third embodiment. Fig. 4 is a cross-sectional view taken along the line IV-IV shown in Fig. 3. Fig. 5 is a perspective view of the spout according to the third embodiment. The following description will center on the differences between the second embodiment and the present embodiment.

A spout 30 according to this embodiment is different from the spout 20 according to the second embodiment in that a plurality of ribs 6 are provided on the inner peripheral surface of the base part 11.

Each of the ribs 6 is provided so as to protrude from the inner circumferential surface of the first annular part 1. In this embodiment, each rib 6 is formed to bridge the flat part 4 connecting the first and second annular parts 1 and 2 and the inner circumferential surface of the third annular part 3, and extends in a direction that lies in a plane including the central axis Ax. In addition, the ribs 6 are arranged intermittently and rotationally symmetrically in the circumferential direction of the base part 11. When the spout 30 is viewed in plan view in the direction in which the central axis Ax of the mouth part 12 extends, they extend radially as shown in Fig. 3. By providing a plurality of ribs on the inner circumferential surface of the base part 11, the thickness of the base part 11 can be reduced while improving its rigidity, thereby suppressing vibrations during ultrasonic welding. After the spout 30 is molded, a cap (not shown) is attached to the mouth part 12. Since the ribs 6 can bear the load from above during capping, stable capping can be achieved.

Although eight ribs 6 are provided on the inner circumferential surface of the base part 11 in this embodiment, the number of ribs 6 is not particularly limited. However, to sufficiently improve the rigidity against the downward load applied during capping, the number of ribs 6 is preferably 3 to 36. The number and size of the ribs 6 are adjusted so that the area occupied by all the ribs 6 is half or less of the area of the inner circumferential surface of the base part 11. If the area occupied by all of the ribs 6 is larger than the area of the inner circumferential surface of the section without the ribs 6, the effect of thinning the base part 11 by the tapered inner circumferential surface of the first annular part 1 is undesirably reduced. The fewer the number of ribs 6, the larger each rib 6 can be formed, which is effective in suppressing vertical vibrations. On the other hand, the more the number of ribs 6, the smaller each rib 6 needs to be, but the greater the effect of canceling out the vibrations due to the phase difference between the vibrations propagating through the ribs 6 and the vibrations propagating through the spaces formed between adjacent ribs 6.

In a cross section including the central axis Ax (see the enlarged view of Fig. 4), it is preferable that the ratio of each rib 6 to the length of each part of the contour line of the inner circumferential surface of the base part 11 is as follows. It is preferable that the rib 6 has a ratio of 30 to 100% relative to a length L1 of the flat part 4. It is preferable that the rib 6 has a ratio of 30 to 100% relative to a length L2 of the inner circumferential surface of the first annular part 1. It is preferable that the rib 6 has a ratio of 0 to 100% relative to a length L3 of the inner circumferential surface of the third annular part 3. In other words, it suffices if the ribs 6 are formed to at least span from the inner circumferential surface of the first annular part 1 to the inner circumferential surface of the flat part 4. By setting the length of the ribs 6 within the above range relative to the length of the contour line of the inner circumferential surface of the base part 11, the rigidity of the base part 11 can be sufficiently improved.

The shape of the lateral cross section (cross section perpendicular to the direction in which the ribs are extending) of the ribs 6 is not particularly limited, and it may be a quadrangular shape such as a trapezoid, or may be a semi-cylindrical shape. The rib 6 may be connected to the inner circumferential surface of the base part 11 via a curved surface. Further, the uppermost surface of the ribs 6 may be provided with a flat part.

The spout 30 according to this embodiment includes a plurality of ribs 6 on the inner circumferential surface of the base part 11, so that vibrations on the base part 11 during ultrasonic welding can be further suppressed. In addition, the ribs 6 improve the resistance to loads from above, which is particularly effective in improving the stability of capping, in which loads tend to be applied towards the lower end of the base part 11.

When resin is injected from the partition 14 during injection molding of the spout 30, part of the resin flows along each rib 6 to the inner periphery of the flange part 13, and then flows from the inner periphery towards the outer periphery of the flange part 13. The ribs 6 complicates the route through which the resin flows. However, as in the first embodiment, the lower surfaces of the base part 11 and the flange part 13 are flat and free of unevenness. Due to this, unlike the conventional spout 80 shown in Figs. 7 and 8, resin flow junctions where air is likely to remain are less likely to occur in the flange part 13. Therefore, unlike conventional spouts, the occurrence of pinholes in the welded area is suppressed, even if the ribs 6 are provided.

### (Fourth Embodiment)

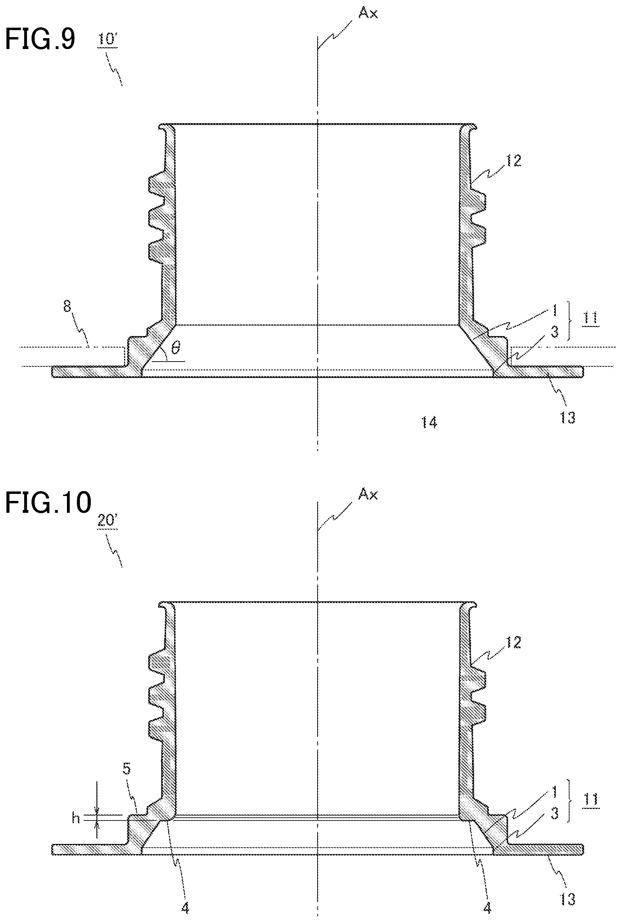

Fig. 9 is a cross-sectional view illustrating a spout according to a fourth embodiment.

The spout plug according to this embodiment includes a spout 10' and a cap (not shown) attached to the spout 10' by threadable engagement. The spout 10' is different from the spout 10 according to the first embodiment in that the partition 14 and the pull ring 16 are omitted. The shape, dimensions, angles, and the like of the other parts of the spout 10' are similar to those of the spout 10 according to the first embodiment.

The base part 11 according to this embodiment includes a first annular part 1 that has a tapered inner circumferential surface whose inner diameter increases from the upper end side towards the lower end side of the base part 11, and is connected to the mouth part 12, and a third annular part 3 connected to the first annular part 1 on the lower end side of the base part 11 and having an inner circumferential surface with a constant inner diameter.

Also in the spout 10' according to this embodiment, the lower surfaces of the flange part 13 and base part 11 are flat, and are not provided with the recesses 89 or radial ribs 90 shown in Figs. 7 and 8. Therefore, similarly to the first embodiment, no resin flow junctions are formed during injection molding such as those shown in the areas X and Y in Fig. 7. Therefore, air is less likely to remain in the flange part 13, and the formation of pinholes can be suppressed even when ultrasonic welding is performed under high energy conditions.

In addition, in a configuration in which there is no partition closing the mouth part 12 as in this embodiment, the resin filling start position (gate position of the mold) can be provided at, for example, the first annular part 1. Since the lower surface of the base part 11 is not provided with recesses or radial ribs in the spout 10' according to this embodiment, the resin can flow more efficiently, and therefore the welding time can be reduced. Note that, if the partition 74 and the pull ring 76 are omitted in the configuration shown in Figs. 7 and 8, the resin filling start position (gate position of the mold) is provided at, for example, the recesses. In that case, it has been necessary to reduce the size of the recesses in order to ensure efficient flow of resin and to prevent the formation of weld lines, and there has been a limit to how much the time required for welding can be reduced, even if welding is performed under high amplitude and high energy conditions. Since the spout 10' according to this embodiment does not have such problems, the resin can flow efficiently during injection molding, and the time required to weld the spout 10' to the container body can be reduced. Further, since the welding time can be reduced, the output of the ultrasonic welding device can be reduced to achieve stable production of packaging containers.

Also in the spout 10' according to this embodiment, the third annular part 3, which has an inner circumferential surface with a constant inner diameter, may be omitted, and the entire inner circumferential surface of the base part 11 may be tapered. However, the strength against a load in the vertical direction (the direction in which the central axis Ax extends) improves if the third annular part 3 is provided. The height of the third annular part 3 is not particularly limited, but it preferably has a height equal to or greater than the thickness of the flange part 13. In that case, the strength against a vertical load can be sufficiently improved.

### (Fifth Embodiment)

Fig. 10 is a cross-sectional view illustrating a spout according to a fifth embodiment.

The spout plug according to this embodiment includes a spout 20' and a cap (not shown) attached to the spout 20' by threadable engagement. The spout 20' is different from the spout 20 according to the second embodiment in that the partition 14 and the pull ring 16 are omitted. The shape, dimensions, angles, and the like of the other parts of the spout 20' are similar to those of the spout 20 according to the second embodiment. A basic configuration of the spout 20' according to this embodiment is similar to that of the spout 10' according to the fourth embodiment, and can achieve the functions and effects described for the spout 10' according to the fourth embodiment.

The base part 11 according to this embodiment includes a first annular part 1 that has a tapered inner circumferential surface whose inner diameter increases from the upper end side towards the lower end side of the base part 11, and is connected to the mouth part 12, and a third annular part 3 connected to the first annular part 1 on the lower end side of the base part 11 and having an inner circumferential surface with a constant inner diameter. In the spout 20' according to this embodiment, the inner circumferential surface of the first annular part 1 and the mouth part 12 above it are connected via the flat part 4. To be more specific, the outer peripheral edge of the flat part 4 is connected to the upper edge of the first annular part 1, and the inner peripheral edge of the flat part 4 is connected to the lower edge of the mouth part 12 via a curved surface. By having a structure in which the first annular part 1 and the mouth part 12 are connected via the flat part 4, the first annular part 1 allows the base part 11 to be thinner, while the rigidity of the base part 11 is improved by increasing the thickness of the connection part between the mouth part 12 and the base part 11. Therefore, it is possible to suppress vibrations in the vertical direction (the direction in which the central axis Ax extends) during ultrasonic welding and prevent the section above the base part 11 from bulging more effectively.

As in the second embodiment, in the spout 20' according to this embodiment, the outer circumferential surface of the base part 11 is provided with an annular flat part 5 perpendicular to the central axis Ax. The perpendicular distance h between the plane including the flat part 4 and the plane including the flat part 5 is preferably 1.0 mm or less. This makes it possible to prevent the connection part between the mouth part 12 and the base part 11 from becoming too thick.

### (Sixth Embodiment)

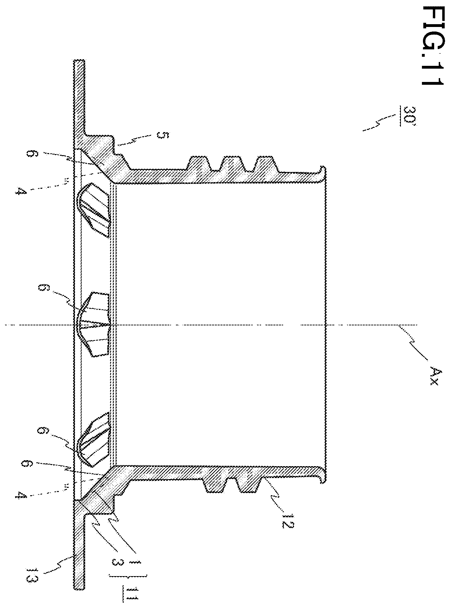

Fig. 11 is a cross-sectional view illustrating a spout according to a sixth embodiment.

The spout plug according to this embodiment includes a spout 30' and a cap (not shown) attached to the spout 30' by threadable engagement. The spout 30' is different from the spout 30 according to the third embodiment in that the partition 14 and the pull ring 16 are omitted. The shape, dimensions, angles, and the like of the other parts of the spout 30' are similar to those of the spout 30 according to the third embodiment. A basic configuration of the spout 30' according to this embodiment is similar to that of the spout 20' according to the fifth embodiment, and can achieve the functions and effects described for the spout 20' according to the fifth embodiment.

The spout 30' according to this embodiment includes a plurality of ribs 6 on the inner circumferential surface of the base part 11, so that vibrations on the base part 11 during ultrasonic welding can be further suppressed. In addition, the ribs 6 improve the resistance to loads from above, which is particularly effective in improving the stability of capping, in which loads tend to be applied towards the lower end of the base part 11.

### Examples

Hereinafter, examples that are specific implementations of the present invention will be described.

### (Example 1)

As Example 1, a spout having the structure shown in the third embodiment (Figs. 3 to 5) was injection molded using a highly resistant resin with an MI of 1.0 g/10 min.

As Comparative Examples 1 and 2, spouts having the structure shown in Figs. 7 and 8 were injection molded using a general-purpose resin with an MI of 10 g/10 min and a highly resistant resin with an MI of 1.0 g/10 min, respectively.

The spouts according to Example 1 and Comparative Examples 1 and 2 were threadably engaged with caps to form spout plugs, which were then ultrasonically welded to paper containers. Welding was carried out multiple times while changing the output of the ultrasonic horn in sequence between 100 J and 140 J, so that packaging containers with different welding conditions are obtained. The obtained packaging containers were filled with water to check if there is leakage from the welded area. In addition, each spout plug was visually inspected after ultrasonic welding to check whether the section above the base part has bulged or not.

Table 1 shows the evaluation results of Example 1 and Comparative Examples 1 and 2. In Table 1, "good" indicates that neither leakage nor bulging occurred, and "poor" indicates that at least one of leakage or bulging occurred.

**[Table 1]**

| | Resin | 100 J | 105 J | 110 J | 115 J | 120 J | 125 J | 130 J | 135 J | 140 J |
|---|---|---|---|---|---|---|---|---|---|---|
| Comp. Ex. 1 | General-purpose resin (MI: 10) | Good | Good | Good | Good | Good | Good | Poor | Poor | Poor |
| Comp. Ex. 2 | Highly resistant resin (MI: 1.0) | Good | Good | Good | Good | Poor | Poor | Poor | Poor | Poor |
| Ex. 1 | Highly resistant resin (MI: 1.0) | Good | Good | Good | Good | Good | Good | Good | Good | Good |

As shown in the row of Comparative Example 1 in Table 1, when a general-purpose resin with an MI of 10 g/10 min was used to form the spout having the conventional structure shown in Figs. 7 and 8, liquid leakage occurred from the welded area when ultrasonic welding was performed with an output of 130 J. When a highly resistant resin with an MI of 1.0 g/10 min was used, leakage occurred from the welded area when ultrasonic welding was performed with a weaker output of 120 J.

In contrast, the spout of Example 1, which was molded from a highly resistant resin with an MI of 1.0 g/10 min, neither liquid leakage nor bulging occurred even when ultrasonic welding was performed at an output of 140 J, demonstrating resistance to welding under high energy conditions. These results confirm that the spout structure according to the present invention is suitable for ultrasonic welding with a high-speed filling device under short-time and high-energy (high-amplitude) conditions.

### (Examples 2 to 4)

As Examples 2, 3, and 4, spouts having the structures shown in the sixth embodiment (Fig. 11), the fifth embodiment (Fig. 10), and the fourth embodiment (Fig. 9), respectively, were injection molded using a highly resistant resin with an MI of 1.0 g/10 min. Example 2 was provided with eight ribs in rotational symmetry.

### (Comparative Example 3)

As Comparative Example 3, a spout having the same structure as that shown in Figs. 7 and 8 except that the partition and the pull ring are omitted was injection molded using a highly resistant resin with an MI of 1.0 g/10 min.

### <Welding Evaluation under the Same Conditions>

The spouts according to Examples 2 to 4 and Comparative Example 3 were threadably engaged with caps to form spout plugs, which were then ultrasonically welded to paper containers to form packaging containers. The output energy of the ultrasonic horn was set to 130 J and the pressure amplitude was set to 285 kPa. Each spout plug was visually inspected after ultrasonic welding to check whether there was edge tearing in the welded area and whether the section above the base part had bulged. Edge tearing in a welded area refers to a state in which the resin has meltedexcessively during welding, causing the welded area to become thin and partially tear. Generally, edge tearing of a welded area is likely to occur when welding is performed at high power in a short time, and tends to start at a weld line (resin flow junction) or the like.

Table 2 shows the welding time for the spout plugs of Examples 2 to 4 and Comparative Example 3, the power consumed by the ultrasonic welding device, whether there was edge tearing in the welded area, and whether the section above the base part had bulged. The consumed power represents the ratio of the output set during welding to the rated output (100%) of the ultrasonic welding device. Since welding at the rated output (100%) will cause the device to stop, it needs to be operated at a power lower than the rated output. When welding is performed with high energy and high amplitude using a high-speed filling device, the consumed power is likely to be high. If the power consumption is too high, problems may occur such as the device stopping or the welding becoming unstable. It is preferable to keep the consumed power at 90% or less to stably produce packages. Note that, in Table 2, the welding time is indicated as the difference from the welding time of Comparative Example 3.

**[Table 2]**

| | Ex. 2 | Ex. 3 | Ex. 4 | Comp. Ex. 3 |
|---|---|---|---|---|
| Welding time | -0.08 s | -0.08 s | -0.1 s | Reference |
| Consumed power | Good: 70% | Good: 80% | Good: 85% | Poor: 95% |
| Welded area edge tearing | Good: No | Good: No | Good: No | Poor: Tear |
| Bulging | Good: No | Good: No | Good: No | Good: No |

When the spout plugs of Examples 2 to 4 were welded under high energy and high amplitude conditions, the welding time was reduced and the consumed power during welding was also reduced compared to the spout plug of Comparative Example 3. The spout plugs according to Comparative Examples 2 to 4 did not suffer from edge tearing in the welded area of the spout or bulging of the section above the base part. In addition, by providing a flat surface connecting the inner surfaces of the first annular part and the cylindrical part, or by providing ribs on the inner surface of the first annular part, the consumed power was further reduced.

As for the spout plug of Comparative Example 3, the provision of a plurality of recesses and a plurality of ribs prevented the section above the base part from bulging. However, because welding was performed under high energy and high amplitude conditions, edge tearing occurred.

### <Evaluation of Range within Which Ultrasonic Welding Is Possible>

Next, spouts having the shapes according to Examples 2 to 4 and Comparative Example 3 were injection molded using each of a highly resistant resin with an MI of 1.0 g/10 min, a general-purpose resin with an MI of 7.0 g/10 min, and a general-purpose resin with an MI of 10.0 g/10 min.

The molded spouts were threadably engaged with caps to form spout plugs, which were then ultrasonically welded to paper containers. Welding was carried out multiple times while changing the output of the ultrasonic horn in sequence between 100 and 140 J, so that packaging containers with different welding conditions are obtained. The obtained packaging containers were filled with water to check if there is leakage from the welded area. In addition, each spout plug was visually inspected after ultrasonic welding to check whether the section above the base part has bulged or not.

Table 3 shows the evaluation results of Examples 2 to 4 and Comparative Example 3. The range of values shown in Table 3 indicates the range of energy in which neither leakage nor bulging occurred. Samples that did not have leakage or bulging within the entire range of 100 to 140 J was evaluated as "good", and those that did were evaluated as "poor".

**[Table 3]**

| MI | Ex. 2 | Ex. 3 | Ex. 4 | Comp. Ex. 3 |
|---|---|---|---|---|
| 10 (General-purpose resin) | Good: 100-140 J | Good: 100-140 J | Good: 100-140 J | Poor: 100-125 J |
| 7 (General-purpose resin) | Good: 100-140 J | Good: 100-140 J | Good: 100-140 J | Poor: 100-125 J |
| 1.0 (Highly resistant resin) | Good: 100-140 J | Good: 100-140 J | Good: 100-140 J | Poor: 100-120 J |

The spout plugs of Examples 2 to 4 did not suffer from liquid leakage or bulging even when they were welded within the energy range of 100 to 140 J, regardless of the fluidity of the resin.

In contrast, the spout plug of Comparative Example 3 had a lower upper energy limit that does not cause liquid leakage or bulging compared to the spout plugs of Examples 2 to 4, which indicates that it has poorer weldability under high energy and high amplitude conditions than the spout plugs of Examples 2 to 4.

These results show that, according to the spout shapes of Examples 2 to 4, it is possible to reduce the occurrence of welding defects while reducing the welding time by performing welding under high energy and high amplitude conditions.

### [Industrial Applicability]

The present invention can be used as a spout plug attached to a packaging container such as a paper container. In particular, the present invention can be used for spout plugs in various applications because it is not easily affected by the fluidity of the resin or the ultrasonic welding conditions.

### [Reference Signs List]

- 1: First annular part
- 2: Second annular part
- 3: Third annular part
- 4: Flat part
- 6: Rib
- 8: Container body
- 10: Spout
- 11: Base part
- 12: Mouth part
- 13: Flange part
- 14: Partition
- 15: Thin part
- 16: Pull ring

## Claims

1. A spout plug comprising a spout and a cap attached to the spout by threadable engagement, wherein
the spout includes
an annular base part,
a cylindrical mouth part connected to an upper end of the base part, and
a plate-like flange part extending outward from a lower end of the base part,
the flange part and the base part have flat lower surfaces, and
the base part includes a first annular part having a tapered inner circumferential surface whose inner diameter increases from an upper end side towards a lower end side.

2. The spout plug according to claim 1, wherein the base part includes a second annular part that is connected to the cylindrical part and has an inner circumferential surface with a constant inner diameter, and
the first annular part that is connected to the second annular part.

3. The spout plug according to claim 2, wherein the base part includes a third annular part connected to the first annular part on a lower end side of the base part and having an inner circumferential surface with a constant inner diameter.

4. The spout plug according to claim 2, wherein the inner circumferential surfaces of the first and second annular parts are connected via an annular flat part perpendicular to a central axis of the mouth part.

5. The spout plug according to claim 1, wherein the spout further includes a plurality of ribs protruding from the inner circumferential surface of the first annular part, and
the ribs extend radially when viewed in plan view in a direction in which a central axis of the mouth part extends, and are arranged intermittently in a circumferential direction of the base part.

6. The spout plug according to claim 3, wherein the inner circumferential surfaces of the first and second annular parts are connected via an annular flat part perpendicular to a central axis of the mouth part,
the spout further includes a plurality of ribs protruding from the inner circumferential surface of the first annular part and bridging the flat part and the third annular part, and
the ribs extend radially when viewed in plan view in a direction in which a central axis of the mouth part extends, and are arranged intermittently in a circumferential direction of the base part.

7. A packaging container comprising:
a container body; and
the spout plug according to any one of claims 1 to 6 and attached to the container body.
